# EUROPEAN PATENT APPLICATION

(11) **EP 1 361 519 A1**
(43) Date of publication of application: **12.11.2003**
(21) Application number: 01934549.5
(22) Date of filing: 05.06.2001
(51) Int. Cl.: G06F 13/00

(54) **INFORMATION COLLECTING METHOD USING PORTABLE COMMUNICATION TERMINAL**

(30) Priority: 14.02.2001 JP 2001036472; 06.03.2001 WO PCT/JP01/01723
(71) Applicant: Kim, Steven, Shinjuku-ku, Tokyo 160-0023 (JP)
(72) Inventor: Kim, Steven, Shinjuku-ku, Tokyo 160-0023 (JP)
(74) Representative: Möbus, Steffen
(86) International application number: JP0104738
(87) International publication number: WO02065301

(57) **Abstract**

This invention makes it possible to improve the collection rate and speed of response of information such as a questionnaire.

Together with creating questionnaires desired by a client, the invention automatically assigns corresponding e-mail addresses to the respective questionnaires, and furthermore, those e-mail addresses are displayed or notified by way of media such as magazines, newspapers, TV, radio, advertisements, and the like; and the invention attaches a questionnaire URL to blank e-mail from the user that used the e-mail address, and sends a reply e-mail, and then stores and totals the responses to that questionnaire URL.

## Description

### BACKGROUND OF THE INVENTION

### Field of the Invention:

This invention relates to a method of collecting information using the e-mail sending/receiving function of a portable communication terminal, and more particular to a method of collecting information that uses a portable communication terminal to add URL address data to a blank e-mail from a user and then returning it, and collecting answers to a questionnaire, for example, on the homepage of that URL, which is accessed by the user.

### Description of the Related Art:

Conventionally, information from a questionnaire such as for performing market research has been collected by a researcher collecting answers on the street, or by having a prepared questionnaire filled in at a specific location. Also, there are methods of collecting questionnaires such as using postcards, telephone or the Internet.

However, in the methods of collecting questionnaires mentioned above, a large amount of time is spent, and the collection rate is either very poor or a large expense is required in collecting the questionnaires. Moreover, when the conditions require fast responses such as are typical for television or advertisements, it can be easily be foreseen that with the questionnaire collection methods mentioned above it would be very difficult.

### SUMMARY OF THE INVENTION

Taking these kinds of conditions into consideration, it is the object of this invention to provide a method of collecting information that uses a portable communication terminal that is capable of improving the information collection rate and quickness of the response.

In order to accomplish the objective of the first claim, the information collection method using a portable communication terminal of this invention comprises a first process of creating information according to a request from the client and assigning corresponding address data to that information by an information-processing apparatus, and when a blank e-mail input only with address information is received from a portable communication terminal, sending return mail, to which a URL for viewing information is attached to the blank e-mail, to the portable communication terminal.

In this first process, it is also possible to include: a second process in which the information-processing apparatus assigns an e-mail address as the address information; a third process in which a portable communication terminal enters the e-mail address that is displayed or notified by way of a display or notification medium and returns a blank e-mail, and also enters necessary items in the data that is downloaded using the data-viewing URL of the return e-mail; and a fourth process in which the information-processing apparatus stores responses to the input data and sends or forwards the results of collected responses to the client.

Moreover, in this first process, it is also possible to include a fifth process in which the auto-information-creation-support unit of the information-processing unit provides various templates for supporting the creation of information desired by the client.

Furthermore, in the first and second processes, it is possible to include a sixth process in which the auto-address-addition unit of the information-processing unit assigns address information at the same time as the information is being created.

Also, in the first process, it is possible to include a seventh process in which the information-registration unit of the information-processing unit registers attribute information about the client in a client-information-management database, and registers attribute information about the user of the portable-communication terminal in a personal-information-management database.

Moreover, in this seventh process, it is possible to include an eighth process of managing the user attribute information using the e-mail address of the portable-communication terminal.

Also, in the fourth process, it is possible to include a ninth process in which the information-registration unit of the information-processing apparatus registers the responses to the information in an information-management database, and performs management using the assigned address information.

In the first process it is possible to include a tenth process in which the information-processing apparatus adds the information-viewing URL of another client to a reply e-mail.

Moreover, in the first and tenth processes, it is possible to include an eleventh process, in which the target-setting unit of the information-processing apparatus provides a template for setting a target in response to being accessed from another client, and creates the target information after all of the required items are checked using this template for setting the target; and a twelfth process in which the matching unit of the information-processing unit matches information with the user using the portable-communication terminal and lists that matching information.

Also, in the tenth process it is possible to include a thirteenth process of adding an advertisement of another client.

The information can be a questionnaire.
The information can also be a marketing promotion.
The information can also be an order form.
The information can also be a lottery or gambling ticket order form.
The information can also be a voting ballot.
The information can also be a point-accumulation promotion.
The information can also be a ticket order form.
The information can also be comments about a product.
The recording medium of claim 19 stores a program that is capable of executing the questionnaire collection method using a portable communication terminal of any of the claims 1 to 10.

In the information collection method using a portable communication terminal of this invention, the information-processing apparatus creates information corresponding to a request from a client and assigns address information corresponding to the data, then after receiving a blank e-mail from the portable-communication terminal with only the address information entered, it sends a reply e-mail back to the portable-communication terminal that has a URL for viewing information attached to the blank e-mail.

### BRIEF DESCRIPTION OF THE DRAWINGS

Fig. 1 is a drawing for explaining a summary of the questionnaire-collection system of a first embodiment of the information collection method using a portable-communication terminal of this invention.
Fig. 2 is a flowchart for explaining the questionnaire-collection method of the questionnaire-collection system of Fig. 1.
Fig. 3 is a flowchart for explaining the questionnaire-collection method of the questionnaire-collection system of Fig. 1.
Fig. 4 is a drawing for explaining the questionnaire-collection method of the questionnaire-collection system of Fig. 1.
Fig. 5 is a drawing for explaining a summary of the questionnaire-collection system of a second embodiment of the information collection method using a portable-communication terminal of this invention.
Fig. 6 is a drawing for explaining the questionnaire-collection method of the questionnaire-collection system of Fig. 5.
Fig. 7 is a drawing for explaining the questionnaire-collection method of the questionnaire-collection system of Fig. 5.
Fig. 8 is a flowchart for explaining the questionnaire-collection method of the questionnaire-collection system of Fig. 5.
Fig. 9 is a flowchart for explaining the questionnaire-collection method of the questionnaire-collection system of Fig. 5.
Fig. 10 is a drawing for explaining a marketing promotion in the information collection method using a portable-communication terminal of this invention.
Fig. 11 is a drawing for explaining a marketing promotion in the information collection method using a portable-communication terminal of this invention.
Fig. 12 is a drawing for explaining an order form in the information collection method using a portable-communication terminal of this invention.
Fig. 13 is a drawing for explaining an order form in the information collection method using a portable-communication terminal of this invention.
Fig. 14 is a drawing for explaining a lottery or gambling ticket order form in the information collection method using a portable-communication terminal of this invention.
Fig. 15 is a drawing for explaining a lottery or gambling ticket order form in the information collection method using a portable-communication terminal of this invention.
Fig. 16 is a drawing for explaining a voting ballot in the information collection method using a portable-communication terminal of this invention.
Fig. 17 is a drawing for explaining a voting ballet in the information collection method using a portable-communication terminal of this invention.
Fig. 18 is a drawing for explaining a point-accumulation promotion in the information collection method using a portable-communication terminal of this invention.
Fig. 19 is a drawing for explaining a point-accumulation promotion in the information collection method using a portable-communication terminal of this invention.
Fig. 20 is a drawing for explaining a ticket order form in the information collection method using a portable-communication terminal of this invention.
Fig. 21 is a drawing for explaining a ticket order form in the information collection method using a portable-communication terminal of this invention.
Fig. 22 is a drawing for explaining comments about a product in the information collection method using a portable-communication terminal of this invention.
Fig. 23 is a drawing for explaining comments about a product in the information collection method using a portable-communication terminal of this invention.

### DESCRIPTION OF THE PREFERRED EMBODIMENTS

The preferred embodiments of the invention will be explained below.

### (Embodiment 1)

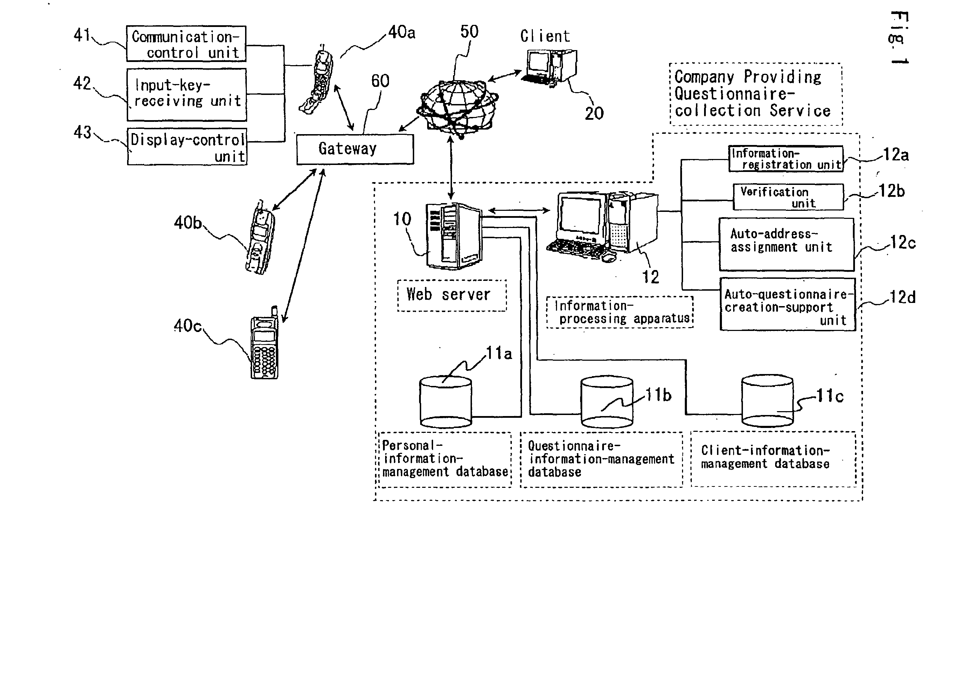

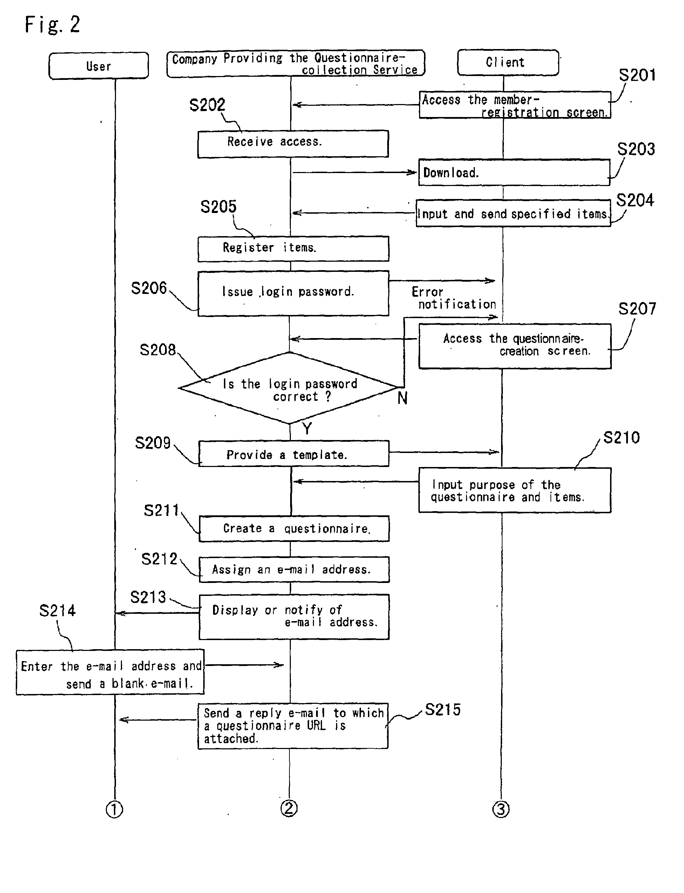

Fig. 1 is a drawing for explaining a summary of the questionnaire-collection system of a first embodiment of the information collection method using a portable communication terminal of this invention, and Fig. 2 to Fig. 4 are drawings for explaining the questionnaire-collection method of a first questionnaire-collection system.

The questionnaire-collection system shown in Fig. 1 comprises: a web server 10 of the company that provides the questionnaire-collection service, the communication terminal 20 of the client, and portable telephones 40a, 40b, 40c that are used as portable-communication terminals by the users, which are all connected together via the Internet 50. When a blank e-mail is sent from a portable telephone 40a, 40b, 40c to the Web server 10 of the company that provides the questionnaire-collection service, the Web server 10 attaches a questionnaire URL, which is address information for calling up the questionnaire information, and returns it to the portable-communication terminal that sent the blank e-mail. Details of the blank e-mail will be described below.

The Web server 10 of the company who provides the questionnaire-collection service comprises: a personal-information-management database 11a, a questionnaire-information-management database 11b and a client-information-management database 11c. Registration and updates of the personal-information-management database 11a, questionnaire-information-management database 11b and client-information-management database 11c are performed from an information-processing apparatus 12.

User attribute information for each individual user that uses the portable telephones 40a, 40b, 40c is registered in the personal-information-management database 11a. Here, the user attribute information includes the address, name, age, occupation, interests, contact information, etc. This attribute information can be managed by using the e-mail address of each respective portable telephone 40a, 40b, 40c.

Questionnaire responses from each individual user that uses the portable telephones 40a, 40b and 40c are registered in the questionnaire-information-management database 11b. The questionnaire responses can be managed by using the e-mail address that is assigned to each questionnaire by the auto-address-assignment unit 12c described later.

Attribute information about the client is registered in the client-information-management database 11c. This attribute information includes the company name, person in charge, contact information, etc.

The information-processing apparatus 12 comprises an information-registration unit 12a, verification unit 12b, auto-address-assignment unit 12c, and auto-questionnaire-creation-support unit 12d.

The information-registration unit 12a registers and updates the information of the personal-information-management database 11a, questionnaire-information-management database 11b and client-information-management database 11c.

The verification unit 12b verifies the client or user by determining whether or not the client or user attribute information is registered in the personal-information-management database 11a or client-information-management database 11c, when access is received from the client using the communication terminal 20, or when access is received from a user using a portable telephone 40a, 40b, 40c. It also verifies the client by checking the login password used by the client when creating a questionnaire, as will be described later.

The auto-address-assignment unit 12c automatically assigns an e-mail address to each questionnaire desired by the client. This forms a one-to-one relationship between each respective questionnaire and e-mail address, making it easier to understand the correspondence of the responses to the questionnaires, of which details will be described later.

The auto-questionnaire-creation-support unit 12d provides various templates for the questionnaires desired by the client, making it easier to create the questionnaire desired by the client.

By using the login password issued by the company that provides the questionnaire-collection service, the client's communication terminal 20 can be used to create a questionnaire or to receive the responses to a questionnaire.

The portable telephones 40a, 40b, 40c that are used by the users are capable of communication via a specified gateway 60, and comprise a communication-control unit 41, input-key-receiving unit 42 and display-control unit 43. Also, as shown in the figure, the portable telephones 40a, 40b, 40c are not limited to using just a single gateway 60, but can also use gateways of other companies.

The communication-control unit 41 executes communication based on the e-mail address or the address information of the questionnaire URL that is received by the input-key-receiving unit 42. The input-key-receiving unit 42 receives input from a ten-key or the like of the portable telephones 40a, 40b, 40c.

The display-control unit 43 displays numbers, text and graphics that are received by the input-key-receiving unit 42 on the display, and also displays the questionnaire screen (explained later) on the display.

Next, the questionnaire-collection method of a questionnaire-collection system constructed like this will be explained.

First, as shown in Fig. 2, the client uses the communication terminal 20 to access the member registration screen of the homepage provided by the company that provides the questionnaire-collection service (step 201). When the company that provides the questionnaire-collection service receives that access (step 202), a screen asking for member registration input is downloaded onto the display of the communication terminal 20 (step 203).

After the client follows the contents of the screen asking for member registration input and enters and sends the specified items (step 204), the information-registration unit 12a of the information-processing apparatus 12 registers the information from the client in the client-information-management database 11c as attribute information (step 205). At this time, the verification unit 12b issues a login password (step 206) and notifies the client.

Next, the client uses the issued login password on the homepage provided by the company that provides the questionnaire-collection service and accesses the questionnaire-creation screen (step 207). When the company that provides the questionnaire-collection service receives that access, it checks whether the login password is correct (step 208), and the auto-questionnaire-creation-support unit 12d of the information-processing apparatus 12 provides various templates that can be used in creating the questionnaire (step 209). On the other hand, when the login password is not correct, an error notification is sent, and the client uses the login password again to access the questionnaire-creation screen.

The client uses the various templates that are provided and enters the purpose of the questionnaire and items (step 210), after which the auto-questionnaire-creation-support unit 12d of the information-processing apparatus 12 uses the entered purpose and items to create a questionnaire following a specified format (step 211). At the same time, the auto-address-assignment unit 12c automatically assigns a corresponding e-mail address to the created questionnaire (step 212).

In other words, when the e-mail address 'xxx-1@ABC.net' is assigned to the first questionnaire, for example, the e-mail address 'xxx-2@ABC.net' is assigned to the second questionnaire. By doing so, 'xxx-1@ABC.net' makes it easy to identify that it is the first questionnaire, and 'xxx-2@ABC.net' makes it easy to identify that it is for the second questionnaire. In this way, xxx-1 and xxx-2 are identifiers that are assigned to the respective questionnaire, and ABC is the identifier indicating the company that provides the questionnaire-collection service.

Next, the e-mail address that is assigned in this way is displayed to or notified to the user, together with the purpose of the questionnaire, using media such as magazines, newspapers, TV, radio, advertisements, or the like (step 213).

Here, the users that are interested in the purpose of the questionnaire use portable telephones 40a, 40b, 40c to enter the e-mail address, which is displayed or notified in media such as magazines, newspapers, TV, radio, advertisements, or the like, and send an e-mail (step 214). In this case, it is not necessary to enter any characters or text in the e-mail field. That is, this is a blank e-mail.

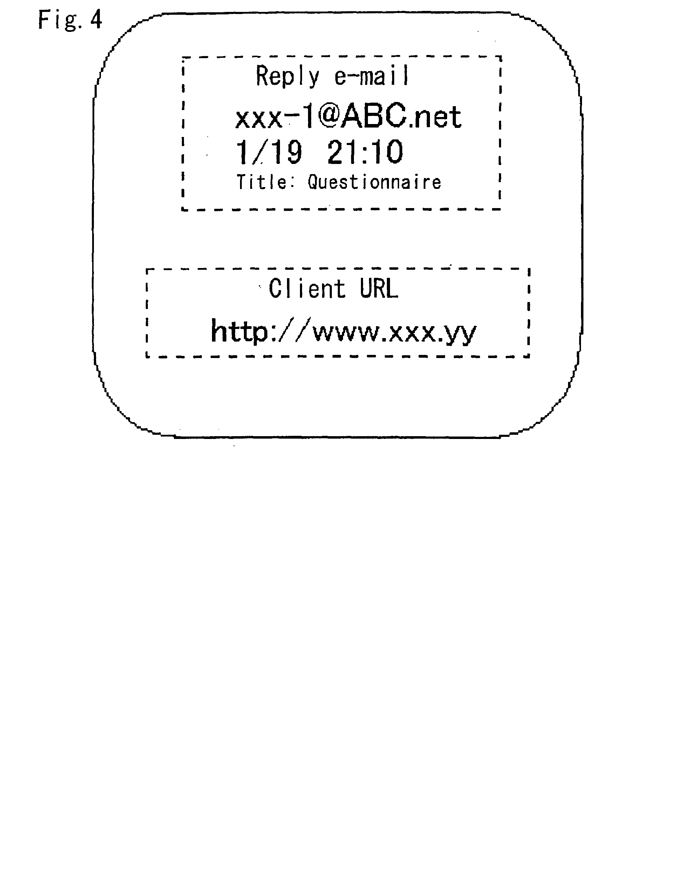

After the company that provides the questionnaire-collection service receives a blank e-mail from a user, the client's questionnaire URL is added to a reply e-mail as shown in Fig. 4 and sent (step 215). In this case, 'Questionnaire' is entered as the title of the reply e-mail.

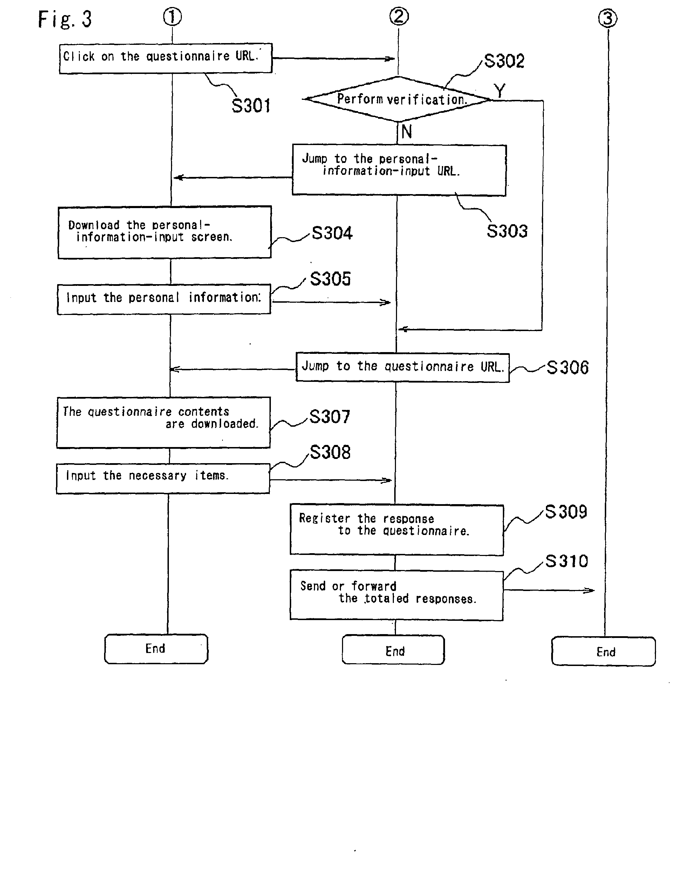

Next, as shown in Fig. 3, when the user clicks on that questionnaire URL (step 301), user verification is performed by the verification unit 12b of the information-processing apparatus 12 of the company that provides the questionnaire-collection service (step 302). In other words, an e-mail address, such as 09031112222@EFG.ne.jp, is assigned to the blank e-mail from the user, for example. In this case, 09031112222 is an identifier indicating the unique number of the portable telephone 40a, 40b, 40c, and EFG is an identifier indicating the communication provider. In other words, identification information that identifies the user is included in the blank e-mail.

Also, this verification is performed according to whether or not the attribute information for the user that sent the blank e-mail is registered in the personal-information-management database 11a. When attribute information of the user that sent the blank e-mail is not registered in the personal-information-management database 11a, the process jumps to the personal-information URL that asks that the personal information be input (step 303).

At this time, a screen asking for input of personal information is downloaded onto the display of the user's portable telephone 40a, 40b, 40c (step 304), and after the personal information has been input (step 305), access to the homepage of the questionnaire URL is executed, and the contents of the questionnaire are downloaded onto the display of the user's portable telephone 40a, 40b, 40c (steps 306, 307).

On the other hand, in step 302 when attribute information for the user that sent the blank e-mail is registered, then access to the homepage of the questionnaire URL is executed, and the contents of the questionnaire are downloaded onto the display of the user's portable telephone 40a, 40b, 40c (steps 306, 307).

After the user enters the necessary items in that questionnaire (step 308), the answers to that questionnaire are registered in the questionnaire-information-management database 11b by the information-registration unit 12a of the information-processing apparatus 12 (step 309).

With the above procedure, each user uses the displayed or notified e-mail address to send a blank e-mail to the company that provides the questionnaire service, and the personal information for each user is stored in the personal-information-management database 11a. Also, the responses to the questionnaire from each user are stored in the questionnaire-information-management database 11b.

Moreover, the responses to the questionnaire that are stored in the questionnaire-information-management database 11b are totaled after a specified period has elapsed according to a specified format, and then sent or forwarded to the client (step 310).

In this way, in the first embodiment, the client creates desired questionnaires, and an e-mail address is automatically assigned for each questionnaire, and that assigned e-mail address is displayed or notified via media such as magazines, newspapers, TV, radio, advertisements or the like; the user sends a blank e-mail to the source using that e-mail address, and the questionnaire URL is attached and returned; responses to the questionnaire URL are stored and totaled, so it is possible to improve the collection rate and response time of the questionnaire.

Also, in the case where questionnaire postcards are attached to magazines or the like, the cost of postage for the postcard is paid by the company, however, by adopting the questionnaire-collection method described above, the cost required for the questionnaire can be greatly reduced.

Moreover, by displaying or notifying the e-mail address corresponding to a questionnaire during a television program or the like, the questionnaire can be collected in realtime as the program progresses, so it can become more interactive.

Furthermore, the invention is also useful for questionnaires such as a research questionnaire or election questionnaire performed by government or a research company.

### (Embodiment 2)

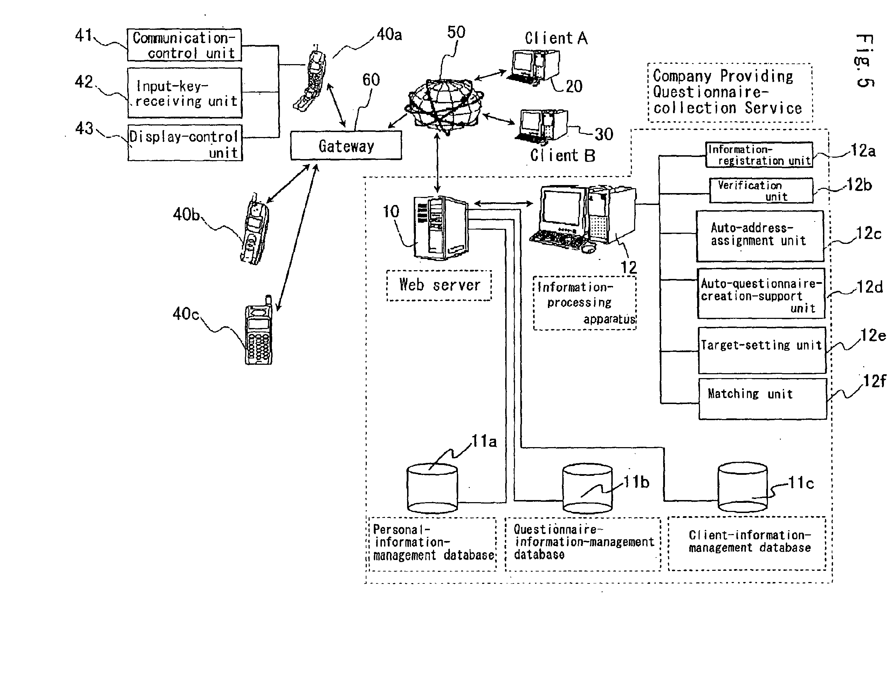

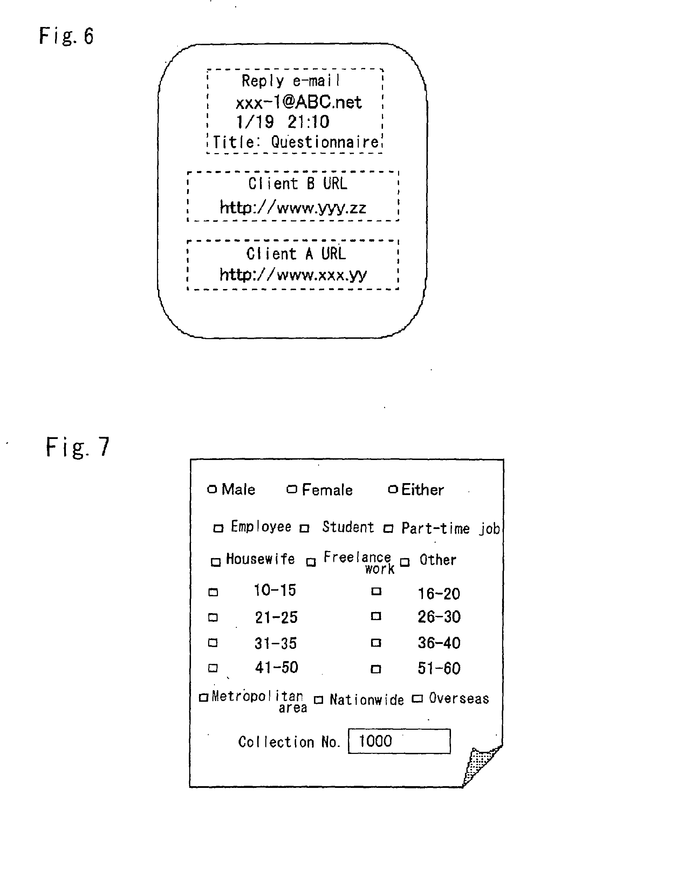

Fig. 5 is a drawing for explaining a summary of the questionnaire-collection system of a second embodiment of the information-collection method using a portable-communication terminal of this invention, and Fig. 6 to Fig. 9 are drawings for explaining the questionnaire-collection method of the questionnaire-collection system shown in Fig. 5. In the drawings explained below, the same reference numbers will be used for parts that are common with those of Fig. 5 and any redundant explanation will be omitted.

In this second embodiment, the client A uses a communication terminal 20, and as another client, client B uses communication terminal 30. Also, a target-setting unit 12e and matching unit 12f are added to the information-processing apparatus 12 of the company that provides the questionnaire-collection service.

In other words, in this second embodiment, as shown in Fig. 6 for example, the questionnaire URL of client B is attached to the reply e-mail in response to the questionnaire of client A. Here, this kind of method will be called 'Piggyback'.

Also, the target-setting unit 12e of the information-processing apparatus 12 provides a template as shown in Fig. 7 that makes it possible to narrow down the target. This template includes items that can be narrowed down such as sex, occupation, age, area, sample number, etc.

Moreover, based on the information set by the target-setting unit 12e, the matching unit 12f of the information-processing apparatus 12 makes a list of matching targets from the personal information registered in the personal-information-management database 11a.

Next, the questionnaire-collection method of a questionnaire-collection system with this kind of construction will be explained. In the figures explained below, it is presumed that a login password has already been issued to the client A in the procedure Step 201 to Step 206 explained in Fig. 2.

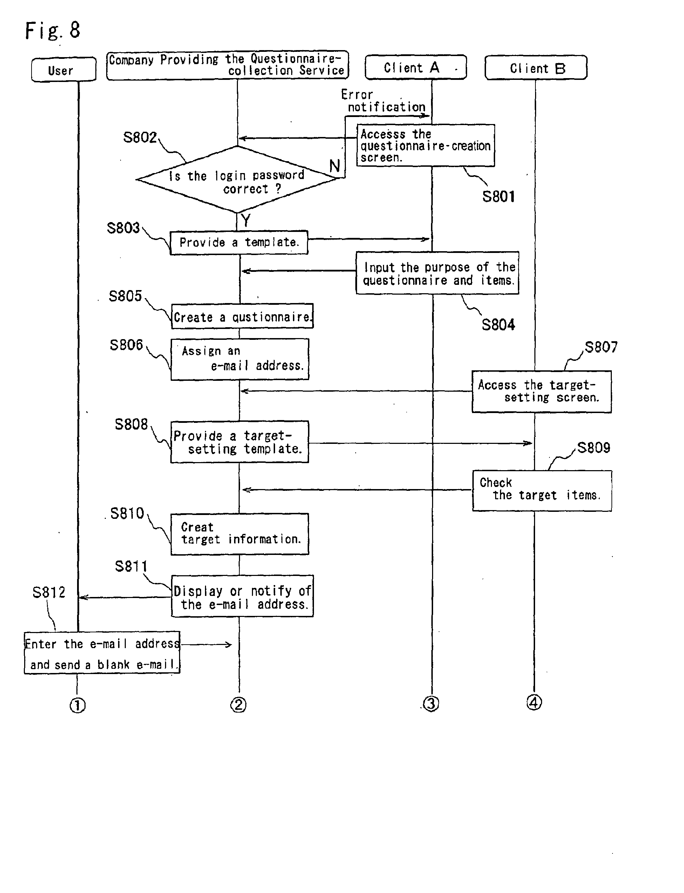

Also, first, as shown in Fig. 8, the client A uses the issued login password to access the questionnaire-creation screen on the homepage provided by the company that provides the questionnaire-collection service (step 801). After the company that provides the questionnaire-collection service receives that access, if the login password is correct (step 802), the auto-questionnaire-creation-support unit 12d of the information-processing apparatus 12 provides various templates that can be used to create a questionnaire (step 803). On the other hand, if the login password is not correct, an error notification is sent, and the client A uses the login password again to access the questionnaire-creation screen.

The client A uses the various provided templates to enter the purpose of the questionnaire and items (step 804), after which the auto-questionnaire-creation-support unit 12d of the information-processing apparatus 12 uses the entered questionnaire purpose and items to create the questionnaire according to a specified format (step 805). At the same time, the auto-address-assignment unit 12c automatically assigns a corresponding e-mail address to the created questionnaire (step 806).

In other words, as described above, when the e-mail address, xxx-1@ABC.net, is assigned to the first questionnaire, for example, then the e-mail address, xxx-2@ABC.net, is assigned to the second questionnaire. In so doing, it becomes easy to identify that xxx-1@ABC.net is the e-mail address for the first questionnaire and that xxx-2@ABC.net is the e-mail address for the second questionnaire, as described above.

Here, when the client B accesses the target-setting screen (step 807), the target-setting unit 12e of the information-processing apparatus 12 provides a template as shown in Fig. 7 for setting a target (step 808).

After the client B checks the necessary items on that target-setting screen (step 809), the target-setting unit 12e of the information-processing apparatus 12 creates target information (step 810).

Next, the e-mail address that was assigned in step 806 is displayed or notified to the user together with the purpose of the questionnaire by using media such as magazines, newspapers, TV, radio, advertisements, etc. (step 811).

Here, a user that is interested in the purpose of the questionnaire uses a portable telephone 40a, 40b, 40c and enters the e-mail address that is displayed or notified by way of the medium such as magazine, newspaper, TV, radio, advertisement, etc. and sends an e-mail (step 812). In this case, it is not necessary to enter anything such as text in the entry field of this e-mail. In other words, as described above, this is a blank e-mail.

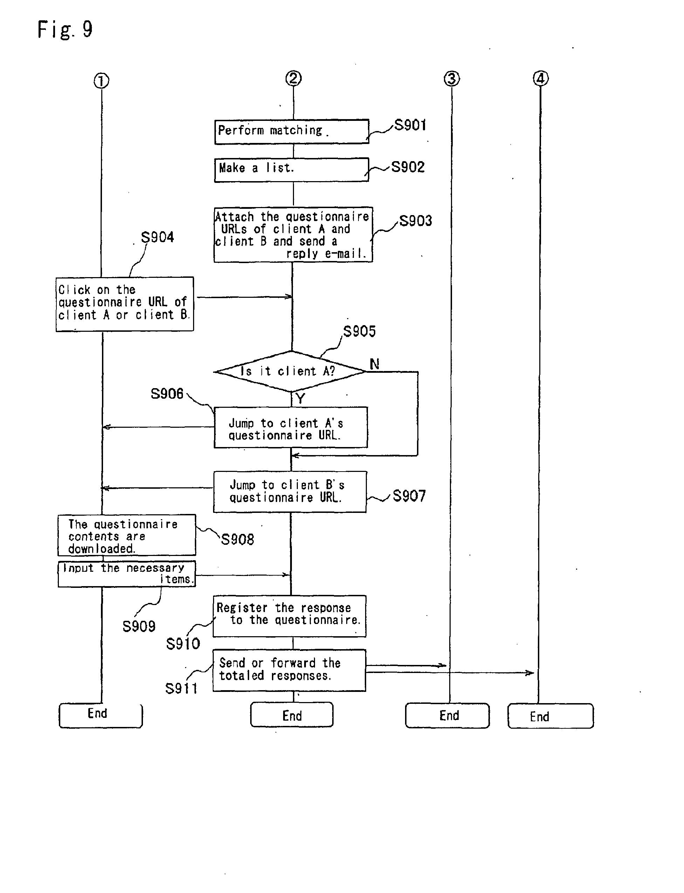

With the procedure described above, the company providing the questionnaire-collection service receives blank e-mails from a plurality of users. At this time, as shown in Fig. 9, the matching unit 12f of information-processing apparatus 12 obtains set target matches from the personal-information-management database 11a, and makes a list of the matching personal information (steps 901 and 902). Also, a reply e-mail with the questionnaire URL of client B piggybacked on the questionnaire URL of client A, as shown in Fig. 6 for example, is sent (step 903). In this case, 'Questionnaire' is entered as the title of the reply e-mail.

When the user clicks on the questionnaire URL from either client A or B (step 904), it is determined which was selected client A or B (step 905), and in the case that it is the questionnaire URL of client A, access to the homepage of that questionnaire URL is executed (step 906), and in the case that it is the questionnaire URL of client B, access to the homepage of that questionnaire URL is executed (step 907), and the questionnaire contents are downloaded to the display of the user's portable telephone 40a, 40b, 40c (step 908).

After the user enters the necessary items in the contents of that questionnaire (step 909), the information-registration unit 12a of the information-processing apparatus 12 registers the response to that questionnaire in the questionnaire-information-management database 11b (step 910).

When users use the displayed or notified e-mail address to send a blank e-mail to the company that provides the questionnaire-collection service according to the procedure described above, the personal-information of each user is stored in the personal-information-management database 11a. Also, the responses to the questionnaire from each user are stored in the questionnaire-information-management database 11b.

Moreover, after set intervals of time, the responses to the questionnaire that are stored in the questionnaire-information-management database 11b are totaled according to a specified format, and the results are sent to the clients A, B (step 911).

In this second embodiment, the questionnaire URL is added to the questionnaire URL of client A and attached to a reply e-mail in this way, so it is possible even for client B, which is a small business or individual, to request an advertising agency or research company to perform market research and to easily and at low cost perform market research using a questionnaire without using an antisocial method such as spam mail. Furthermore, in this case, client A can receive an advertisement fee from client B or other advertisers, so it is possible to perform the questionnaire service at a discount.

Also, by using the template shown in Fig. 7 that is provided by the target-setting unit 12e of the information-processing apparatus 12 for narrowing down the target, it is possible to narrow down the target by sex, occupation, age, area, etc., and thus it is possible to perform the questionnaire for more specific users, and to obtain effective and precise research data.

Moreover, these questionnaires are sent to users that requested participation in the questionnaire and whose personal information is already registered in the personal-information-management database 11a, so measures are taken such that the mailing does not become spam mail in which unnecessary mail is sent.

In this second embodiment, the case of attaching the questionnaire URL from client B to the reply-mail with the questionnaire from client A was explained, however, this embodiment is not limited to a questionnaire URL and could also be an advertisement.

Also, in the embodiments described above, a blank e-mail is received from a portable telephone 40a, 40b, 40c so the responses to the questionnaire from the user are not limited by place and time, and thus it is possible to prepare a questionnaire that is not limited by place and time.

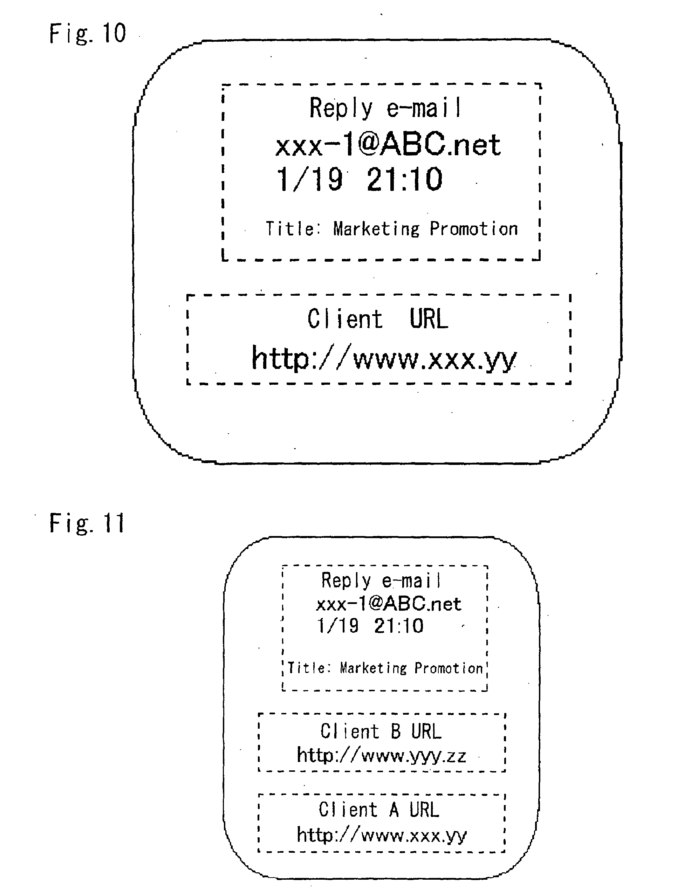

Furthermore, in the embodiments described above, when the company that provides the questionnaire-collection service receives the blank e-mail from the user, the case shown in Fig. 4 and Fig. 6, where sending a reply e-mail to which a questionnaire URL having 'Questionnaire' as the client's title is attached, was explained, however, the embodiments are not limited to this example, and as shown in Fig. 10 and Fig. 11 for example, it is possible to send a reply e-mail to which a questionnaire URL having, 'Marketing Promotion' as the client's title, is attached.

In this case, after the user accesses the homepage of the questionnaire URL, the contents of an arbitrary marketing promotion are downloaded to the display of the user's portable telephone 40a, 40b, 40c, and by checking those contents, the action of checking the contents is registered in the questionnaire-information-management database 11b by the information-registration unit 12a of the information-processing apparatus 12.

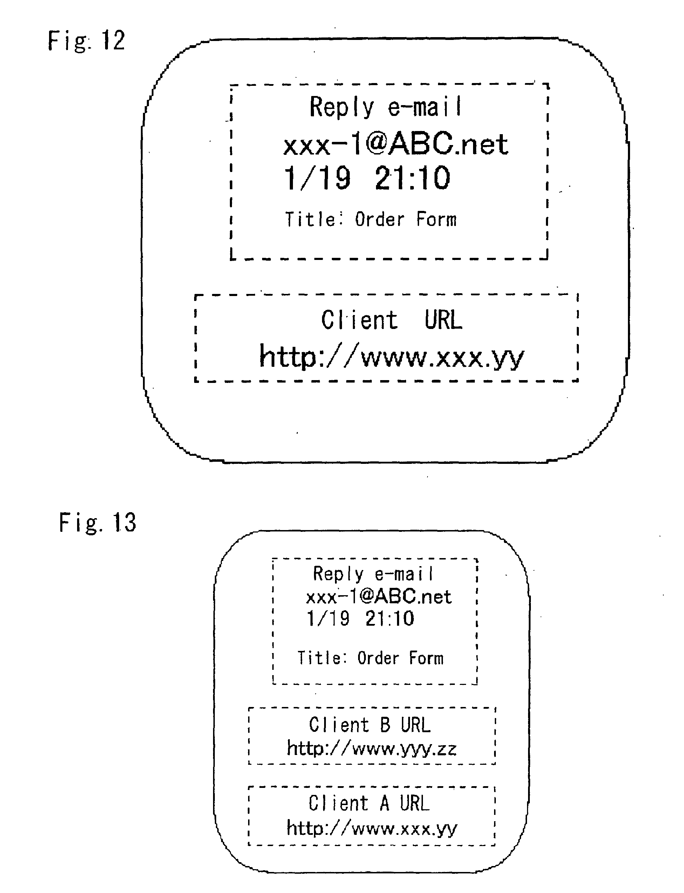

Also, as shown in Fig. 12 and Fig. 13, it is possible to send a reply e-mail to which a questionnaire URL, having 'Order Form' as the client's title, is attached.

In this case, after the user accesses the homepage of the questionnaire URL, the so-called catalog shopping contents and an order form are downloaded to the display of the user's portable telephone 40a, 40b, 40c, so in the case when it is desired to make a purchase, after entering the specified items in the order form, the contents entered in that order form are registered in the questionnaire-information-management database 11b by the information-registration unit 12a of the information-processing apparatus 12 as described above.

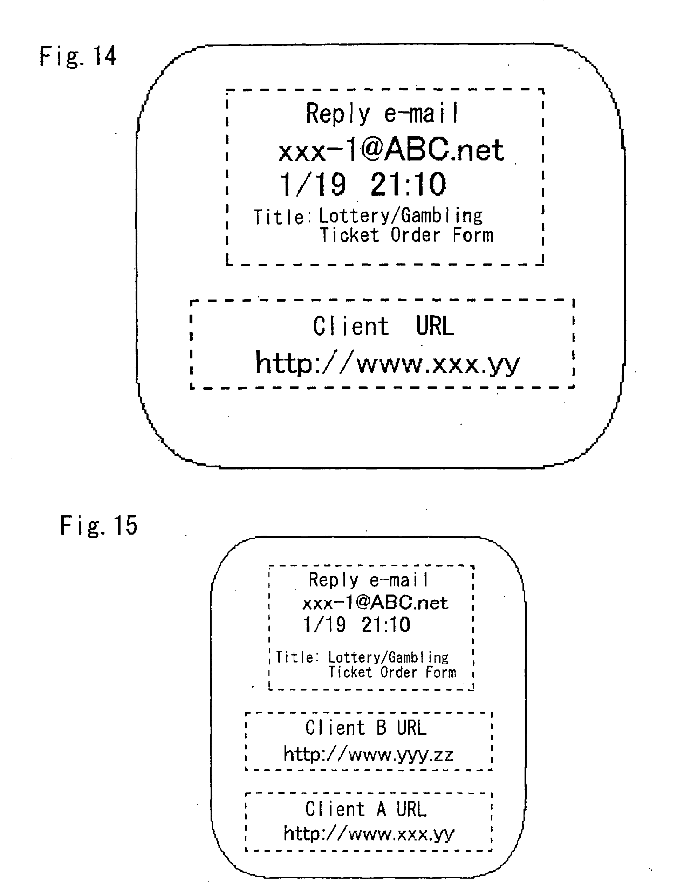

Also, as shown in Fig. 14 and Fig. 15, it is possible to send a reply e-mail to which a questionnaire URL having, 'Lottery/Gambling Ticket Order Form' as the client's title, is attached.

In this case, after the user accesses the homepage of the questionnaire URL, an order form for a lottery, Mini-Loto, Loto 6, or Toto ticket, or an order form for a horseracing, bicycle racing, boat racing or auto racing gambling ticket is downloaded to the display of the user's portable telephone 40a, 40b, 40c, so after the contents are entered in the order form when it is desired to make a purchase, the contents entered into the order form are registered in the questionnaire-information-management database 11b by the information-registration unit 12a of the information-processing apparatus 12 as described above.

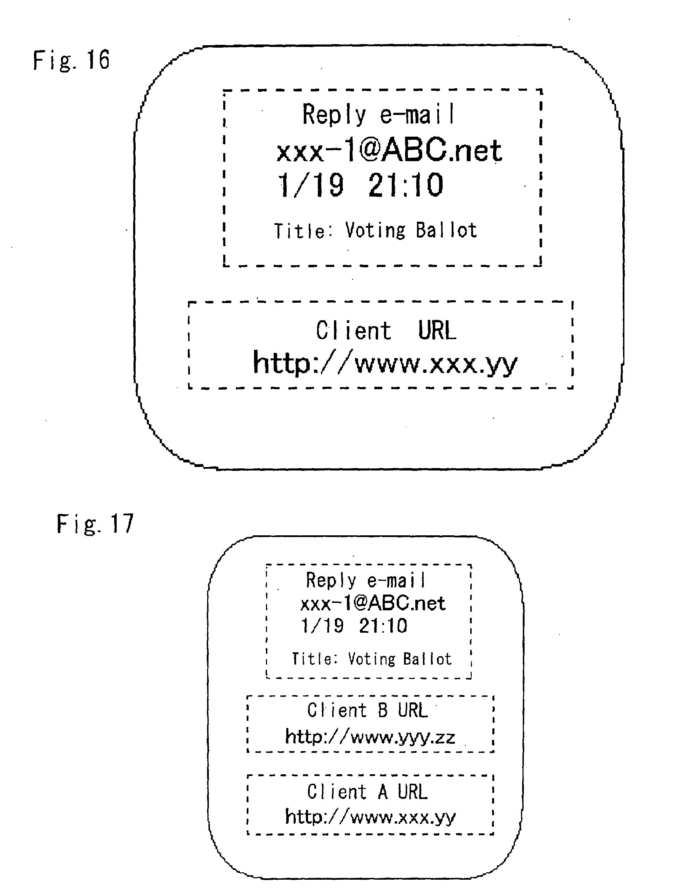

Also, as shown in Fig. 16 and Fig. 17, it is possible to send a reply e-mail to which a questionnaire URL, having 'Voting Ballot' as the client's title, is attached.

In this case, after the user accesses the homepage of the questionnaire URL, a voting ballot such as that for an election is downloaded to the display of the user's portable telephone 40a, 40b, 40c, and after the specified items are entered into that form, the entered contents are registered in the questionnaire-information-management database 11b by the information-registration unit 12a of the information-processing apparatus 12 as described above.

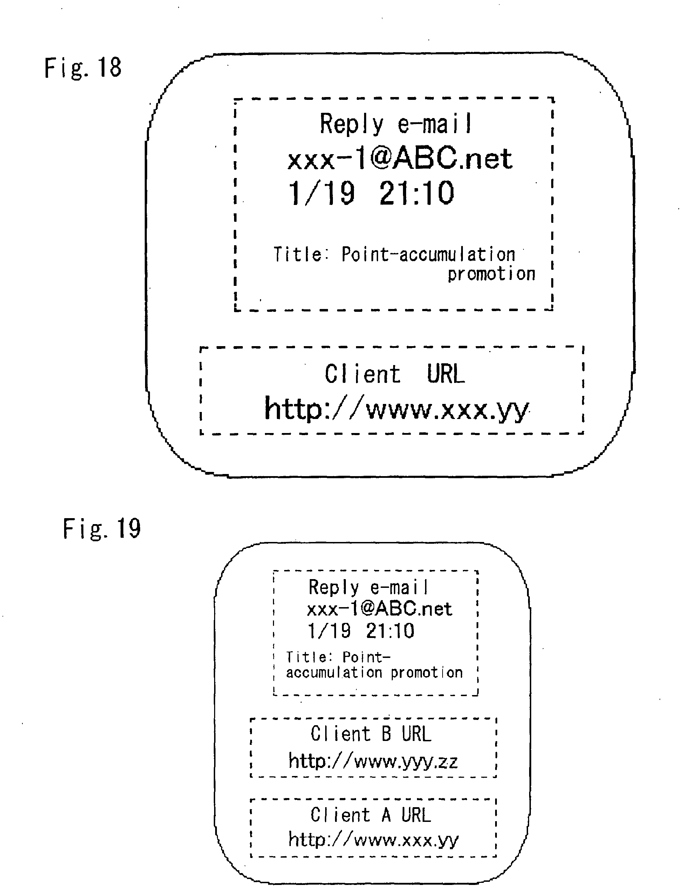

Also, as shown in Fig. 18 and Fig. 19, it is possible to send a reply e-mail to which a questionnaire URL, having 'Point-accumulation Promotion' as the client's title, is attached.

In this case, after the user accesses the homepage of the questionnaire URL, the gift promotion for obtaining points is downloaded to the display of the user's portable telephone 40a, 40b, 40c, and by taking action to check the contents, the action of checking the contents is registered in the questionnaire-information-management database 11b by the information-registration unit 12a of the information-processing apparatus 12 as described above.

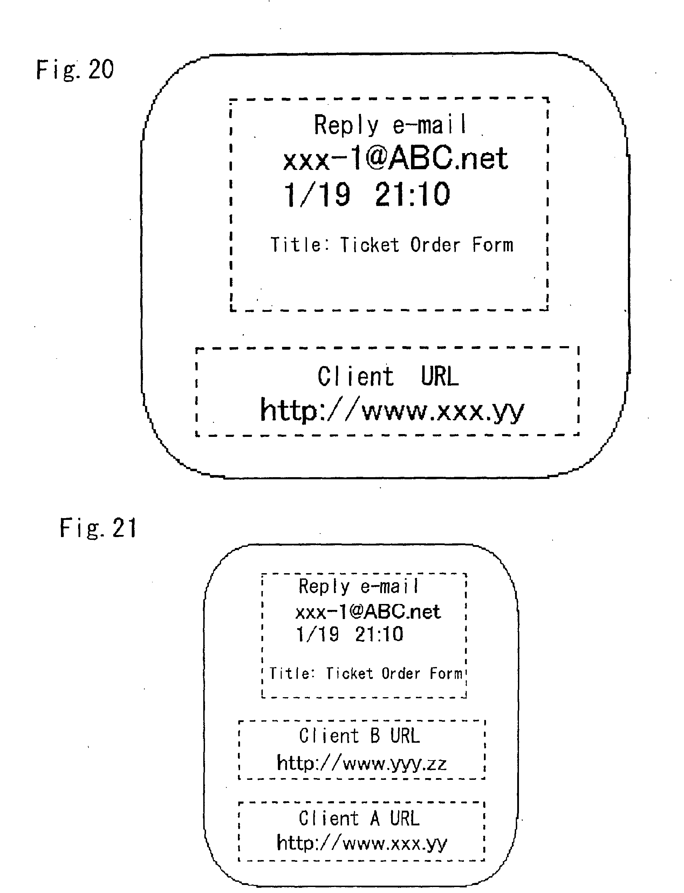

Also, as shown in Fig. 20 and Fig. 21, it is possible to send a reply e-mail to which a questionnaire URL, having 'Ticket Order Form' as the client's title, is attached.

In this case, after the user accesses the homepage of the questionnaire URL, the ticket order form is downloaded to the display of the user's portable telephone 40a, 40b, 40c, so by entering the specified items in the order form, the contents entered in the order form are registered in the questionnaire-information-management database 11b by the information-registration unit 12a of the information-processing apparatus 12 as described above.

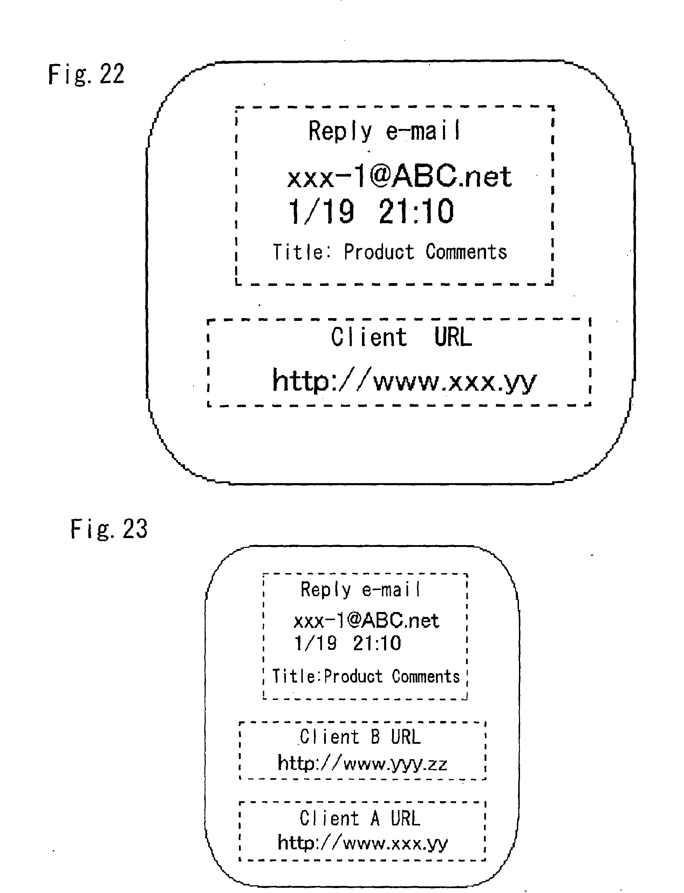

Also, as shown in Fig. 22 and Fig. 23, it is possible to send a reply e-mail to which a questionnaire URL, having 'Product Comments' as the client's title, is attached.

In this case, after the user accesses the homepage of the questionnaire URL, contents for asking for comments about various products are downloaded to the display of the user's portable telephone 40a, 40b, 40c, so by entering the product comments according to those contents, the contents entered are registered in the questionnaire-information-management database 11b by the information-registration unit 12a of the information-processing apparatus 12 as described above.

An explanation of the reference numbers used above is given below.

### Explanation of Reference Numbers

10 Web server
11a Personal-information-management database
11b Questionnaire-information-management database
11c Client- information-management database
12 Information-processing apparatus
12a Information-registration unit
12b Verification unit
12c Auto-address-assignment unit
12d Auto-questionnaire-creation-support unit
12e Target-setting unit
12f Matching unit
20, 30 Communication terminal
40a, 40b, 40c Portable telephones
41 Communication-control unit
42 Input-key receiving unit
43 Display-control unit
50 Internet
60 Gateway

### Industrial Applicability

With the information-collection method using a portable-communication terminal of this invention, an information-processing apparatus creates information according to a request from a client, and assigns an address that corresponds to that information; and when it receives a blank e-mail in which only the address information from a portable-communication terminal has been entered, it sends a reply e-mail, to which an information-viewing URL has been added to the blank e-mail, so it is possible to improve the collection rate of information such as a questionnaire as well as the response speed.

## Claims

1. An information-collection method using a portable-communication terminal comprising a first process wherein an information-processing apparatus creates information according to a request from a client and assigns address information that corresponds to the information; and when it receives a blank e-mail in which only the address information from a portable-communication terminal has been entered, sends a reply e-mail, to which an information-viewing URL has been added to the blank e-mail.

2. The information-collection method using a portable-communication terminal of claim 1 wherein first process comprises:
a second process wherein the information-processing apparatus assigns an e-mail address as address information;
a third process wherein the portable-communication terminal is used to enter an e-mail address that is displayed or notified by way of a display or advertisement medium and to send a blank e-mail, and is used to enter necessary items in the information downloaded using the information-viewing URL of the reply e-mail; and
a fourth process wherein the information-processing apparatus stores the responses to the input information, and sends to or notifies the client of the totaled results of the responses.

3. The information-collection method using a portable-communication terminal of claim 1 wherein first process comprises a fifth process wherein the auto-information-creation-support unit of the information-processing apparatus provides various templates for performing support for creating the information desired by the client.

4. The information-collection method using a portable-communication terminal of claim 1 or claim 2 wherein first and second processes comprise a sixth process wherein the auto-address-assignment unit of the information-processing apparatus assigns address information at the same time when the information is created.

5. The information-collection method using a portable-communication terminal of claim 1 wherein the first process comprises a seventh process wherein the information-registration, unit of the information-processing apparatus registers attribute information about the client in the client-information-management database, and registers the attribute information about the user that uses the portable-communication terminal in the personal-information-management database.

6. The information-collection method using a portable-communication terminal of claim 5 wherein the seventh process comprises an eighth process of managing the user attribute information using the e-mail address of the portable-communication terminal.

7. The information-collection method using a portable-communication terminal of claim 2 wherein the fourth process comprises a ninth process wherein the information-registration unit of the information-processing apparatus registers the responses to the information in the information-management database, and manages the responses using the assigned address information.

8. The information-collection method using a portable-communication terminal of claim 1 wherein the first process comprises a tenth process wherein the information-processing apparatus attaches the information-viewing URL of another client to the reply e-mail.

9. The information-collection method using a portable-communication terminal of claim 1 or claim 8 wherein:
the first and tenth processes comprise:
an eleventh process wherein the target-setting unit of the information-processing apparatus provides templates for setting the target in response to access from the other client, and after checking the necessary items using the target-setting template, creates target information; and
a twelfth process wherein the matching unit of the information-processing unit finds matching users that use the portable-communication terminals and makes a list of the matching information.

10. The information-collection method using a portable-communication terminal of claim 8 wherein the tenth process comprises a thirteenth process of attaching an advertisement of another client.

11. The information-collection method using a portable-communication terminal of anyone of the claims 1 to 3 wherein the information is a questionnaire.

12. The information-collection method using a portable-communication terminal of anyone of the claims 1 to 3 wherein the information is a marketing promotion.

13. The information-collection method using a portable-communication terminal of anyone of the claims 1 to 3 wherein the information is an order form.

14. The information-collection method using a portable-communication terminal of anyone of the claims 1 to 3 wherein the information is a lottery or gambling ticket order form.

15. The information-collection method using a portable-communication terminal of anyone of the claims 1 to 3 wherein the information is a voting ballot.

16. The information-collection method using a portable-communication terminal of anyone of the claims 1 to 3 wherein the information is a point-accumulation promotion.

17. The information-collection method using a portable-communication terminal of anyone of the claims 1 to 3 wherein the information is a ticket order form.

18. The information-collection method using a portable-communication terminal of anyone of the claims 1 to 3 wherein the information is a product comments.

19. A recording medium on which a program is recorded that can execute the information-collection method using a portable-communication terminal of anyone of the claims 1 to 10.
